# EUROPÄISCHE PATENTSCHRIFT

(11) **EP 1 358 855 B1**
(45) Veröffentlichungstag und Bekanntmachung des Hinweises auf die Patenterteilung: **17.06.2009**
(21) Anmeldenummer: 03009491.6
(22) Anmeldetag: 26.04.2003
(51) Int. Cl.: A61C 13/00, B29C 67/00, B22F 3/105

(54) **Verfahren zur Herstellung von Produkten durch Freiform-Lasersintern**
Process for manufacturing parts by freeform laser-sintering
Procédé pour la production d'objets par formage de formes libres lors d'un procédé de frittage au laser

(30) Priorität: 03.05.2002 DE 10219983
(43) Veröffentlichungstag der Anmeldung: 05.11.2003
(73) Patentinhaber: BEGO Medical GmbH, 28359 Bremen (DE)
(72) Erfinder: Hagemeister, Frank, 28215 Bremen (DE); Uckelmann, Ingo, 28309 Bremen (DE)
(74) Vertreter: Eisenführ, Speiser & Partner

(56) Entgegenhaltungen:
- EP-A- 0 655 317
- EP-A- 0 686 480
- EP-A- 1 021 997
- EP-A- 1 120 228
- DE-A- 19 538 257
- US-A- 5 932 059
- US-A1- 2001 035 597

## Beschreibung

Die Erfindung betrifft ein Verfahren zum Herstellen metallischer oder nicht-metallischer (aus Keramik oder Kunststoff bestehender) Produkte durch Freiform-Lasersintern, bei dem die Produkte mittels eines datengesteuert geführten Laserstrahls aus pulverförmigem Werkstoff auf einer Substratplatte schichtweise senkrecht aufgebaut werden gemäß dem Anspruch 1.

Ein solches Verfahren ist beispielsweise aus der US-PS 4,863,538 bekannt. Bei der Anwendung dieses Verfahrens auf die Herstellung von Produkten kleiner Abmessungen, wie sie beispielsweise in der Dentaltechnik in Form von Zahnersatz oder dentalen Hilfsteilen benötigt werden, ergeben sich Schwierigkeiten aus dem Umstand, dass diese kleinteiligen Produkte - von denen zumeist mehrere auf einer Substratplatte üblicher Größe aufgebaut werden können - einerseits den im Verhältnis zu ihrem inhärenten Widerstandsmoment relativ großen Horizontalkräften beim jeweiligen Abstreifen überschüssigen Pulvers während des Aufbringens der jeweils nächsten Pulverschicht widerstehen müssen, andererseits so mit der Substratplatte verbunden werden und bleiben müssen, dass sie nach Abschluss des Aufbauvorganges von dieser ohne Beschädigung abgenommen werden können.

Aus DE 195 38 257 A1 ist ein Verfahren gemäß dem Oberbegriff des Anspruchs 1 und eine Stützkonstruktion bekannt, die in einen inneren Kernbereich und einen äußeren Hüllbereich zerlegt ist. Der Hüllbereich wird dabei schwächer und nur in Teilbereichen verfestigt, um hierdurch eine leichtere Abtrennbarkeit der Stützkonstruktion zu erzielen.

Aus EP 1 021 997 A2 ist die Anwendung des Lasersinterverfahrens zur Herstellung von Zahnersatz bekannt.

Aus US 5,932,059 ist die Herstellung von dreidimensionalen Objekten mittels aufeinanderfolgender Aushärtung von individuellen Schichten des Objekts bekannt.

Aus EP 0 686 480 A2 sind stereolithografische Stützen in einer Vielzahl von Gestaltungen und Ausrichtungen bekannt.

Die Erfindung löst dieses Problem mit einem Verfahren gemäß Anspruch 1. Die Stütze stellt eine ausreichend sichere und stabile Verbindung zwischen der Substratplatte und dem Produkt her, gleichwohl gewährleistet die Sollbruchstelle, dass ein fertiges Produkt entnommen werden kann, welches keiner oder nur geringer Nachbearbeitung bedarf. Bevorzugt wird zur Verringerung der Festigkeit der Querschnitt der Stütze verringert und/oder Durchbrüche in der Stütze vorgesehen.

Es ist ferner vorteilhaft, die Stütze oder Stützen im Querschnitt länglich auszubilden und mit ihrer Längsrichtung auf der Substratplatte in Richtung des Pulver-Schichtauftrags auszurichten. Sie setzen dann den beim Schichtauftrag auftretenden Kräften ausreichenden Widerstand entgegen, sind aber nach Abschluss des Aufbauverfahrens senkrecht dazu vom Produkt unschwer abzubrechen, wenn sie bei der Entfernung von der Substratplatte an diesem verblieben waren.

Soweit es sich beim herzustellenden Produkt um napfförmige Dentalprodukte, wie Käppchen, Kronen etc. handelt, sieht eine Weiterbildung der Erfindung vor, dass diese mit ihrem vollflächigen Querschnitt auf der/den Stütze(n) aufsitzend aufgebaut werden. Es wird also zunächst der vollflächige Boden des Produkts gefertigt und auf diesem die ringförmig geschlossene Wandung.

Zusätzliche vorteilhafte Weiterbildungen der Erfindung ergeben sich aus der nachfolgenden Beschreibung eines Ausführungsbeispiels und den weiteren Unteransprüchen.

In der Zeichnung zeigt:
- Fig. 1: in perspektivischer und schematischer Darstellung die Anordnung und Ausbildung einer Mehrzahl fertiggestellter napfförmiger Dentalprodukte noch auf der Substratplatte einer Lasersinter-Vorrichtung;
- Fig. 2: ein einzelnes Laserdentalprodukt mit der noch daran befestigten Stütze, ebenfalls in perspektivischer und schematischer Darstellung;
- Fig. 3: das in Fig. 2 dargestellte Produkt partiell aufgeschnitten;
- Fig. 4: eine schräggestellte perspektivische Ansicht eines Dentalprodukts gemäß Fig. 2 mit abgewandelter Stütze; und
- Fig. 5: eine stark vergrößerte schematische Darstellung der flächigen Laserstrahl-Führung.

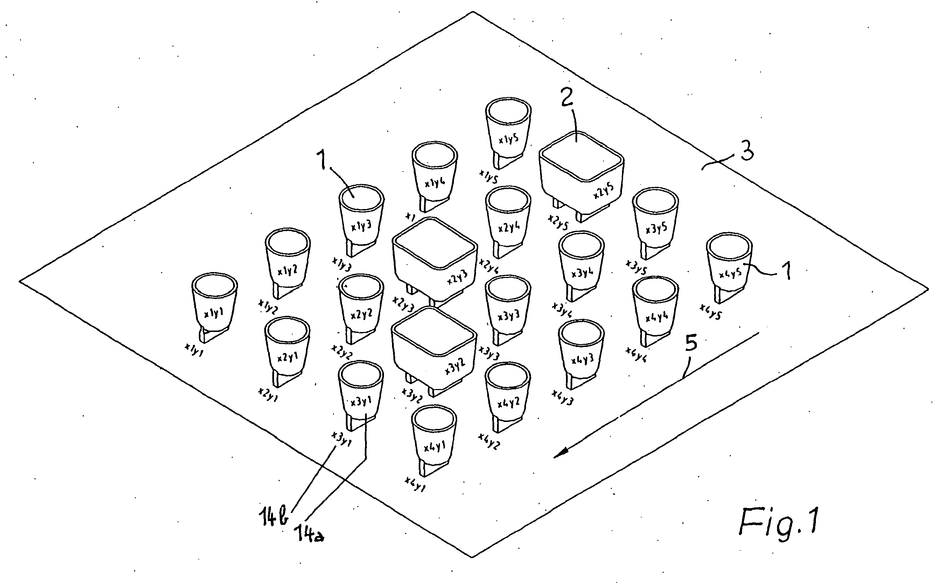

Die in Fig. 1 dargestellten napfförmigen Dentalprodukte 1 und 2 sind mit Hilfe des bekannten Lasersinter-Verfahrens auf einer Substratplatte 3 der jenes Verfahren ausführenden Vorrichtung schichtweise aus pulverförmigem Werkstoff, insbesondere Metallpulver unterschiedlicher Korngröße aufgebaut worden. Während die schematische Darstellung gleichartige Formkörper zeigt, sind sie in der Praxis individuell geformt, und zwar mit Hilfe der intraoral oder extraoral gescannten Daten der Patienten-Zähne oder -Zahnstümpfe, für die sie bestimmt sind.

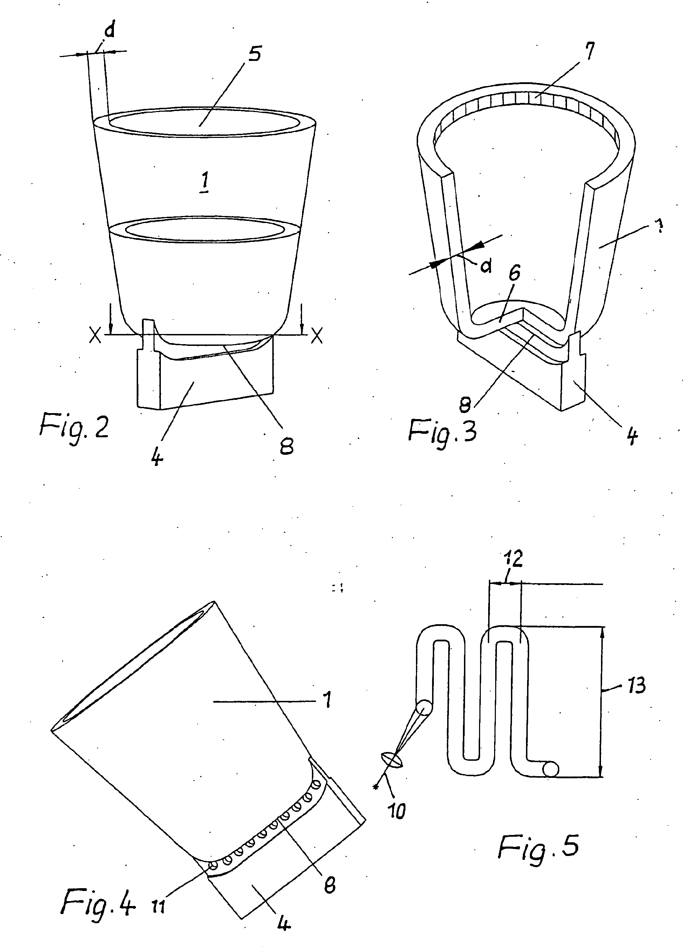

Fig. 1 zeigt auch, dass die einzelnen Produkte 1, 2 mittels einer Stütze 4 (oder deren zwei) mit der Substratplatte 3 verbunden sind. Die Stützen 4 sind in Längsrichtung des Pulver-Schichtauftrages (Pfeil 5) länglich ausgebildet und haben quer dazu eine relativ geringe Dicke. Beides ist genauer den Fig. 2 und 3 zu entnehmen, welche ein Dentalprodukt 1 in noch stärkerer Vergrößerung als Fig. 1 darstellen. Die Korngröße des jeweiligen Schichtauftrages kann - bei gleicher Schichtdicke - über die Höhe des Produkt-Aufbaus geändert werden.

Die Fig. 2 und 3 zeigen deutlich die Napfform des Dentalprodukts 1. In der schematischen Darstellung ist die Dicke d der konisch-ringförmigen Seitenwand 5 über ihre gesamt Höhe einheitlich und gleich der Dicke des Bodens 6 dargestellt; in der Praxis ist das nicht der Fall. Insbesondere läuft der Randbereich 7 auf eine Wanddicke von 50 - 200 µm aus, jedoch wird innenseitig - wie in Fig. 3 angedeutet - durch Änderung der Produktdaten gegenüber den gescannten Daten im Inneren Randbereich 7 eine Verdickung vorgenommen. Dort erfolgt eine Oberflächenglättung durch oberflächiges Anschmelzen, die eine Politur der inneren Randfläche bedeutet.

Die Stützen 4 sind, wie ebenfalls die Fig. 2 und 3 zeigen, an ihren Stirnenden etwas nach oben gezogen, der Außenfläche des Produkts 1 folgend. Über die gesamte Anschlusslänge der Stütze 4 am Produkt 1 ist die Querschnittsdicke der Stütze 4 mit einem geringen Höhenmaß - unmittelbar im Anschluss an die Außenfläche des Produkts 1 - verringert, so dass sich zwischen der Außenfläche des Produkts 1 und der Stütze 4 eine Sollbruchlinie 8 ergibt. Durch Seitendruck auf das Produkt 1 der Stütze 4 gegenüber oder umgekehrt lässt sich die Stütze 4 leicht und sauber vom Produkt 1 abbrechenBeim Ausführungsbeispiel gemäß Fig. 4 ist die Sollbruchstelle bzw. -linie 8 dadurch gebildet, dass außer der Verringerung der Querschnittsdicke der Stütze 4 Durchbrechungen 11 in der Stütze vorgesehen sind, die an die Außenfläche des Produkts 1 angrenzen und nicht nur das Ablösen der Stütze vom Produkt erleichtern, sondern auch eine sauberere Außenfläche des Produkts erzielen. Unter "Durchbrechung" oder "Perforation" ist dabei auch eine - von außen nicht oder kaum sichtbare - Porosität der jeweils an die Produkt-Außenfläche angrenzenden Pulverschicht-Abschnitte zu verstehen.

Fig. 5 zeigt schematisch die Anlage der Ablenkung des Laserstrahls 10 im Falle der Bearbeitung ausreichend großer Flächen der jeweiligen Pulverlage, wie etwa der Querschnittsfläche des Bodens 6 eines Produkts 1 (Fig. 3). Jedoch wird auch dort der (hier kreisförmige) Rand durch einen entsprechend kreisförmig geführten Laserstrahl erhitzt, und Gleiches gilt für den Querschnitt dünner Wandungen. Je nach erforderlichem Energieeintrag wird bei flächiger Erwärmung der Spurabstand 12 oder die Streifenbreite 13 verändert, und zwar vorzugsweise in Abhängigkeit vom jeweiligen Verhältnis der Fläche - etwa der Fläche des Bodens 6 eines Produkts 1 - zur Randlänge der zu behandelnden Pulverschicht - etwa der Länge des Randes des Bodens 6. Auch kann der Energieeintrag durch Änderung der Energiedichte des Laserstrahls 10 oder dessen Ablenkgeschwindigkeit geändert werden, und zwar insbesondere automatisch unter entsprechender Auswertung der für die jeweils zu sinternde Pulverschicht maßgebenden Daten. Weitere Einflussgrößen des Energieeintrags sind der Durchmesser und die Leistung des Laserstrahls 10. Im Falle der flächenabhängigen Änderung wird zunächst die Strahlleistung und ggf. zulässig der Strahldurchmesser geändert.

Fig. 1 zeigt zwei Alternativen einer Markierung der einzelnen Produkte, welche Verwechslungen verhindern soll. Im einen Fall ist die Markierung 14a direkt auf dem Produkt, im anderen Fall ist die Markierung 14b auf der Substratplatte 3 neben dem Produkt 1, jeweils mittels lasergesinterten Pulvers, aufgetragen worden.

## Patentansprüche

1. Verfahren zum Herstellen metallischer oder nicht-metallischer Produkte durch Freiform-Lasersintern, bei dem
- die Produkte mittels eines datengesteuert geführten Laserstrahls aus pulverförmigem Werkstoff auf einer Substratplatte schichtweise senkrecht aufgebaut werden,
- zwischen der Substratplatte und der Außenfläche des Produkts mindestens eine Stütze aufgebaut wird, die über eine Sollbruchstelle mit der Außenfläche des Produkts verbunden ist und
- die Sollbruchstelle durch eine Verringerung der Festigkeit der Stütze entlang der Außenkontur des Produkts gebildet wird,
**dadurch gekennzeichnet, dass**
- die Stütze/Stützen im Querschnitt länglich ausgebildet und mit ihrer Längsrichtung auf der Substratplatte im Wesentlichen in Richtung des Pulver-Schichtauftrags ausgerichtet wird/werden.

2. Verfahren nach Anspruch 1,
**dadurch gekennzeichnet, dass** zur Verringerung der Festigkeit der Querschnitt der Stütze verringert wird.

3. Verfahren nach Anspruch 1 oder 2,
**dadurch gekennzeichnet, dass** zur Verringerung der Festigkeit Durchbrüche (11) in der Stütze vorgesehen werden.

4. Verfahren nach einem der vorhergehenden Ansprüche,
**dadurch gekennzeichnet, dass** napfförmige Dentalprodukte, beispielsweise Käppchen, Kronen, mit ihrem vollflächigen Querschnitt auf der/den Stütze/Stützen aufsitzend aufgebaut werden.

5. Verfahren nach Anspruch 4,
**dadurch gekennzeichnet, dass** die Wanddicke der Produkte am Rand etwa 50 - 200 µm beträgt und die Produktdaten im Sinne einer entsprechenden Verdickung geändert werden.

6. Verfahren nach Anspruch 5,
**dadurch gekennzeichnet, dass** die Produktdaten innenseitig geändert werden.

7. Verfahren insbesondere nach Anspruch 6,
**dadurch gekennzeichnet, dass** der innere Randbereich oberflächig, d.h. mit geringer Tiefe angeschmolzen und so geglättet, insbesondere poliert, wird.

8. Verfahren insbesondere nach Anspruch 1,
**dadurch gekennzeichnet, dass** in Abhängigkeit vom jeweiligen Verhältnis der Fläche zur Randlänge einer Sinterschicht Randbedingungen des Sintervorganges, nämlich die Energiedichte des Laserstrahls und/oder dessen Ablenkgeschwindigkeit und/oder der Spurabstand und/oder die Streifenbreite, d. h. die Breite senkrecht zur Spurrichtung, automatisch geändert werden.

9. Verfahren nach Anspruch 8,
**dadurch gekennzeichnet, dass** zur Änderung der Energiedichte vorrangig die Strahlleistung und nachrangig der Strahldurchmesser geändert wird.

10. Verfahren nach mindestens einem der vorhergehenden Ansprüche,
**dadurch gekennzeichnet, dass** bei gleicher Schichtdicke die Korngröße des Werkstoff-Pulvers über die Höhe des Produkt-Aufbaus geändert wird.

11. Verfahren nach mindestens einem der vorhergehenden Ansprüche,
**dadurch gekennzeichnet, dass** jedes auf der Substratplatte aufgebaute Produkt oder die Substratplatte in unmittelbarer Nähe jedes Produkts durch den Laserstrahl mit einer identifizierenden Markierung versehen wird.

## Claims

1. A method of manufacturing metallic or non-metallic products by freeform laser sintering, in which
- the products are constructed from a powdery material on a substrate plate in a perpendicular, layer-by-layer manner, by means of a laser beam guided in a data-controlled manner,
- between the substrate plate and the outer surface of the product there is constructed at least one support connected to the outer surface of the product via a predetermined breaking point and
- the predetermined breaking point is formed by a reduction in the strength of the support along the external contour of the product,
**characterised in that**
- the support/supports are elongate in cross-section and is/are oriented on the substrate plate with its/their longitudinal direction substantially in the direction of the powder-layer application.

2. A method according to claim 1,
**characterised in that** the cross-section of the support is decreased to reduce the strength.

3. A method according to claim 1 or 2, **characterised in that** openings (11) are provided in the support to reduce the strength.

4. A method according to any one of the preceding claims, **characterised in that** cup-shaped dental products, for example caps, crowns, are constructed with their entire cross-section resting on the support(s).

5. A method according to claim 4, **characterised in that** the wall thickness of the products at the edge is approximately 50 - 200 µm and the product data are altered in the sense of a corresponding thickening.

6. A method according to claim 5, **characterised in that** the product data are altered with respect to the inner surface.

7. A method in particular according to claim 6, **characterised in that** the inner edge region is partially melted and thus smoothed, in particular polished, at its surface, i.e. to a low depth.

8. A method in particular according to claim 1, **characterised in that** boundary conditions of the sintering process, namely the energy density of the laser beam and/or its deflection speed and/or the track spacing and/or the stripe width, i.e. the width perpendicular to the track direction, are altered automatically subject to the particular ratio of the surface to the edge length of a sintered layer.

9. A method according to claim 8, **characterised in that** the energy density is altered primarily by altering the beam power and secondarily by altering the beam diameter.

10. A method according to at least one of the preceding claims, **characterised in that** with uniform layer thickness, the grain size of the material powder is altered over the height of the product structure.

11. A method according to at least one of the preceding claims, **characterised in that** each product constructed on the substrate plate or the substrate plate is provided with identifying marking in the immediate vicinity of each product by the laser beam.

## Revendications

1. Procédé de fabrication d'objets métalliques ou non métalliques selon un processus de formage libre par frittage laser, d'après lequel
- les objets sont construits verticalement sur une plaque de substrat, par couches successives, en un matériau sous forme de poudre, au moyen d'un faisceau laser guidé en étant commandé en fonction de données caractéristiques informatiques,
- entre la plaque de substrat et la surface extérieure de l'objet est construit au moins un élément de support, qui est relié à la surface extérieure de l'objet par une zone de rupture programmée, et
- la zone de rupture programmée est formée par une diminution de la résistance de l'élément de support le long du contour extérieur de l'objet,
**caractérisé en ce que**
- l'élément/les éléments de support est/sont de configuration longiligne en section transversale, et leur direction longitudinale est orientée sur la plaque de substrat sensiblement dans la direction de l'application des couches de poudre.

2. Procédé selon la revendication 1,
**caractérisé en ce que** pour diminuer la résistance, on diminue la section transversale de l'élément de support.

3. Procédé selon la revendication 1 ou 2,
**caractérisé en ce que** pour diminuer la résistance, on prévoit des ouvertures de passage (11) dans l'élément de support.

4. Procédé selon l'une des revendications précédentes,
**caractérisé en ce que** l'on réalise des objets dentaires en forme de godets, par exemple des cabochons, des couronnes, construits avec leur section transversale pleine reposant sur l'élément/les éléments de support.

5. Procédé selon la revendication 4,
**caractérisé en ce que** l'épaisseur de paroi des objets au niveau du bord prend une valeur d'environ 50 - 200 µm, et les données de l'objet sont modifiées dans le sens d'une augmentation d'épaisseur adéquate.

6. Procédé selon la revendication 5,
**caractérisé en ce que** les données de l'objet sont modifiées côté intérieur.

7. Procédé selon la revendication 6,
**caractérisé en ce que** la zone de bordure intérieure est mise en fusion superficiellement, c'est-à-dire sur une faible profondeur, et est ainsi lissée, en particulier polie.

8. Procédé notamment selon la revendication 1,
**caractérisé en ce qu'**en fonction du rapport respectif de la surface à la longueur du bord d'une couche de frittage, des conditions aux limites de l'opération de frittage sont modifiées automatiquement, à savoir la densité d'énergie du faisceau laser et/ou sa vitesse de balayage et/ou le pas de la piste et/ou la largeur de bande, c'est à dire la largeur perpendiculairement à la direction de la piste.

9. Procédé selon la revendication 8,
**caractérisé en ce que** pour la modification de la densité d'énergie, on modifie en priorité la puissance du faisceau et en second lieu le diamètre du faisceau.

10. Procédé selon l'une au moins des revendications précédentes,
**caractérisé en ce que** pour une même épaisseur de couche, on modifie la grosseur de grain de la poudre de matériau le long de la hauteur de l'objet en construction.

11. Procédé selon l'une au moins des revendications précédentes,
**caractérisé en ce que** chaque objet construit sur la plaque de substrat, ou bien la plaque de substrat à proximité directe de chaque objet, est muni d'un marquage d'identification par le rayon laser.
